# EUROPEAN PATENT APPLICATION

(11) **EP 3 081 585 A1**
(43) Date of publication of application: **19.10.2016**
(21) Application number: 15163391.4
(22) Date of filing: 13.04.2015
(51) Int. Cl.: C08J 3/20

(54) **FABRICATION METHOD OF TOUGHENED PA**

(71) Applicant: BASF SE, 67056 Ludwigshafen am Rhein (DE)
(72) Inventor: Park, Hye Jin, 49076 Osnabrück (DE); Kasaliwal, Gaurav, 421203 Dombivli (East) (IN)
(74) Representative: Baier, Martin

(57) **Abstract**

The present invention relates to a method for the preparation of reinforced thermoplastic polymers which comprise an expanded graphite, at least one rubber and at least one thermoplastic polymer. The present invention furthermore relates to the use of the reinforced thermoplastic polymers in fuel applications and to the reinforced thermoplastic polymers as such. Moreover, the present invention relates to a molding article manufactured from the reinforced thermoplastic polymer.

## Description

The present invention relates to a method for the preparation of reinforced thermoplastic polymers which comprise an expanded graphite, at least one rubber and at least one thermoplastic polymer. The present invention furthermore relates to the use of the reinforced thermoplastic polymers in fuel applications and to the reinforced thermoplastic polymers as such. Moreover, the present invention relates to a molding article manufactured from the reinforced thermoplastic polymer.

Graphene and other plate-shaped modifications of graphite are known to be suitable for the use in thermoplastic polymers to increase their gas or fuel barrier properties. To modify the gas or fuel barrier properties of thermoplastic polymers with graphene and other plate-shaped modifications of graphite, various methods are described in the state of the art.

US 7,923,491 describes an elastomeric composition for use as air barriers for tire innerliners or innertubes. The elastomeric composition comprises graphite nanoparticles, an elastomer component and a filler that is not graphite. The composition furthermore can comprise from 0 to 49% by weight of a thermoplastic resin. For the elastomeric composition according to US 7,923,491, any graphite nanoparticle is suitable. For the preparation of the elastomeric composition, the graphite nanoparticles, the elastomer component, the filler and optionally the thermoplastic resin are combined in a mixing device to mix them. After the mixing articles can be formed, in particular tires and tire parts.

US 2010/0096595 discloses a nanocomposite for barrier membranes, in particular for gas diffusion membranes. The nanocomposite comprises graphene and a polymer matrix. As graphene, among others, expanded graphite is suitable. The polymer matrix contains thermoplastic polymers, elastomeric polymers and mixtures thereof. The nanocomposite according to US 2010/0096595 is prepared either from solution or by compounding the polymer matrix with the graphene.

A polymer composition comprising a polymer binder, graphene and graphite is described in US 2012/0142832. Among others, the polymer binder can be selected from thermosetting resins, thermoplastics and elastomers. The polymer composition is manufactured by simply mixing the components comprised in the polymeric composition.

Most compositions described in the state of the art exhibit good gas and fuel barrier properties, but they usually do not exhibit a sufficient toughness, in particular a sufficient impact resistance for the use in fuel applications.

The object underlying the present invention is therefore to provide a method for the preparation of reinforced thermoplastic polymers that have an increased toughness, in particular a high impact resistance and at the same time exhibit good fuel and gas barrier properties. The process for the preparation of the reinforced thermoplastic polymer should be carried out simply and cost-efficiently.

This problem was solved by a method for the preparation of a reinforced thermoplastic polymer comprising the steps:
a) compounding of an expanded graphite and at least one rubber in a first extruder to obtain a rubber modified graphite,
b) compounding of the rubber modified graphite obtained in step a) with at least one thermoplastic polymer in a second extruder to obtain the reinforced thermoplastic polymer,
wherein the at least one rubber comprises functional groups that are reactive towards the at least one thermoplastic polymer.

It has surprisingly been found that the reinforced thermoplastic polymer produced with the inventive method exhibits a significantly reduced permeation of gas and fuel with respect to the thermoplastic polymer without the at least one rubber and the expanded graphite and also with respect to a thermoplastic polymer that comprises the at least one rubber without the expanded graphite.

Furthermore, the stiffness and the toughness of the reinforced thermoplastic polymer is increased with respect to the thermoplastic polymer without reinforcement and also with respect to the reinforced thermoplastic polymers produced by the methods described in the state of the art.

The method according to the present invention is described in more detail below.

### Step a)

In step a), an expanded graphite and at least one rubber are compounded in a first extruder to obtain a rubber modified graphite.

The temperature during the compounding of the expanded graphite and the at least one rubber is in general in the range from 80 to 200°C, preferably in the range from 80 to 180°C and particularly preferably in the range from 80 to 160°C.

Therefore, the temperature during step a) is in general in the range from 80 to 200°C, preferably in the range from 80 to 180°C and particularly preferably in the range from 80 to 160°C.

An object of the present invention is therefore also a method wherein the temperature during step a) is in the range from 80 to 200°C.

The pressure in the first extruder during the compounding of the expanded graphite and the at least one rubber in step a) is usually in the range from 1 to 80 bar, preferably in the range from 1 to 50 bar and particularly preferably in the range from 1 to 30 bar.

As first extruder in step a), any extruder known to the skilled person is suitable which can be used at the temperatures during step a). In general, the first extruder can be heated at least to the temperature, at which the expanded graphite and the at least one rubber are compounded in step a).

The first extruder may be a single or a twin screw extruder. Twin screw extruders are preferred. Twin screw extruders are also known as double screw extruders. The twin screw extruders may be corotating or counterrotating.

The first extruder can also comprise further devices, for example mixing devices. Mixing devices are known to the skilled person. Suitable mixing devices are for example static mixers and dynamic mixers.

The expanded graphite and the at least one rubber can be added to the first extruder separately from each other and can be mixed and compounded in the first extruder to obtain the rubber modified graphite.

In another embodiment of the present invention, the expanded graphite and the at least one rubber are mixed with each other before adding to the first extruder and the obtained mixture is then compounded in the first extruder to obtain the rubber modified graphite.

For the mixing of the expanded graphite and the at least one rubber before the addition to the first extruder, any mixing device is suitable.

The expanded graphite and the at least one rubber can be compounded in step a) in any ratio. Preferably in the range from 20 to 99% by weight of the expanded graphite and from 1 to 80% by weight of the at least one rubber are compounded in step a), based on the sum of the percent by weight of the expanded graphite and the at least one rubber.

Particularly preferred in the range from 30 to 95% by weight of the expanded graphite and in the range from 5 to 70% by weight of the at least one rubber, more preferred in the range from 50 to 90% by weight of the expanded graphite and in the range from 10 to 50% by weight of the at least one rubber are compounded in step a) in the first extruder, based on the sum of the percent by weight of the expanded graphite and the at least one rubber.

Therefore, in one embodiment, the rubber modified graphite obtained in step a) comprises in the range from 20 to 99% by weight of the expanded graphite and in the range from 1 to 80% by weight of the at least one rubber, preferably in the range from 30 to 95% by weight of the expanded graphite and in the range from 5 to 70% by weight of the at least one rubber and particularly preferred in the range from 50 to 90% by weight of the expanded graphite and in the range from 10 to 50% by weight of the at least one rubber, based on the total amount of the rubber modified graphite.

Another object of the present invention is therefore a method wherein the rubber modified graphite obtained in step a) comprises in the range from 20 to 99 % by weight of the expanded graphite and in the range from 1 to 80 % by weight of the at least one rubber, based on the total amount of the rubber-modified graphite.

The rubber modified graphite obtained in step a) generally exhibits a core-shell-structure. These core-shell-structures are known to the skilled person. For example the rubber modified graphite comprises the expanded graphite as core particle and the at least one rubber as shell. The rubber modified graphite typically has a particle size in the range from 50 nm to 10 µm and preferably in the range from 100 nm to 5 µm. measured by transmission electron microscopy.

During the compounding of the expanded graphite and the at least one rubber, the functional groups comprised in the at least one rubber, typically do not react with the expanded graphite. Therefore, the rubber modified graphite obtained in step a) in general comprises the same functional groups that are reactive towards the at least one thermoplastic polymer, as the at least one rubber.

In step a), further fillers can be added to the first extruder. "Further fillers" within the context of the present invention means precisely one further filler and also a mixture of two or more further fillers.

The further fillers are in general as well compounded with the expanded graphite and the at least one rubber. Suitable further fillers are known to the skilled person and are, for example, selected from the group consisting of clay, carbon fibers and glass fibers.

To the person skilled in the art it is clear that the further fillers differ from the expanded graphite.

If further fillers are added in step a), the amount of the further fillers is typically in the range from 1 to 50% by weight, preferably in the range from 2 to 20% by weight and particularly preferably in the range from 5 to 10% by weight, based on the sum of the percent by weight of the expanded graphite, the at least one rubber und the further fillers.

If further fillers are added, the percent by weight given above for the expanded graphite and the at least one rubber are based on the sum of the percent by weight of the expanded graphite, the at least one rubber and the further fillers.

The percent by weight of the expanded graphite, the at least one rubber and, if appropriate, the further filler, generally add up to 100% by weight.

To the person skilled in the art, it should be clear, that if further fillers are added in step a), then the rubber modified graphite obtained in step a) also comprises the further fillers.

### Expanded graphite

In step a) the expanded graphite and the at least one rubber are compounded.

Expanded graphite is known to the skilled person.

Expanded graphite is usually produced from a graphitic or partially graphitic starting material selected from the group consisting of natural graphite, pyrolytic graphite, kish graphite, compressed expanded graphite, partially oxidized graphite and graphite fibres. The starting material is reacted with substances capable of intercalation or mixtures of substances capable of intercalation (intercalating material(s)) to give an intercalation compound which subsequently is expanded. Intercalating materials may be halogens, SO₃, NO₃, alkali metals or other compounds. Preferably the intercalation compound is obtained by treating the starting material, preferably graphite, with a strong acid, preferably concentrated sulphuric acid in combination with an oxidizing agent or with concentrated nitric acid. Organic acids like formic acid or acetic acid are suitable as well. After the treatment with the intercalating material, the intercalated compound, e.g. the intercalated graphite, is washed and/or dried. Processes for preparation of intercalated compounds are known to the person skilled in the art; see for example Chen et al., Carbon Vol. 34, No. 12, 1996, 1599-1603. Intercalated compounds suitable for preparing the expanded graphite comprised in the solid composition according to the present invention are commercially available under the designation expandable graphite, e.g. from NGS Naturgraphit GmbH, Germany, LUH GmbH, Germany and TECHNOGRAFIT GmbH, Germany.

Upon rapid heating of the intercalated compound to 200°C to about 1000° it reacts by thermal decomposition of the intercalated material like N- or S-compounds and the crystal layers of the graphite are delaminated to release the gaseous decomposition products. The heat treatment may be carried out in an expansion oven, a plasma oven or by means of microwaves, for instance. The volume of the expanded graphite may increase up to 280 times of the starting volume. The expansion volume obtained depends on different parameters, e.g. the particle size of the graphite used, the kind of the starting material (for example natural graphite or synthetic graphite) and the type and velocity of the heating.

The preparation of expanded graphite is known to the person skilled in the art. A description of a method for the preparation of expanded graphite may be found for instance in EP 1 491 497 B1. Expanded graphite is commercially available, e.g. from NGS Naturgraphit GmbH, Germany.

The expandable graphite used to prepare the expanded graphite in the present invention typically contains up to 40 wt.-% of intercalating material and usually has a particle size of 50 µm to 800 µm before expansion determined by sieving. Typically the intercalated compound used for preparing the expanded graphite according to the present invention has an expansion rate of 120 to 350 cm³/g upon heating and a starting temperature of expansion of 160 to 300°C. After expansion the expanded graphite contains typically at least 85 wt.-%, preferred at least 90 wt.-%, more preferred at least 95 wt.-%, most preferred at least 98 wt.-%, in particular at least 99 wt.-% of carbon.

The expanded graphite may be ground before the use in step a). Suitable methods for grounding the expanded graphite are known to the skilled person, for example, the expanded graphite may be ground in a ball mill.

The expanded graphite preferably comprises plate shaped particles. Particularly preferably, the plate shaped particles have a thickness in the range from 10 to 1000 nm, preferably in the range from 15 to 50 nm and particularly preferably in the range from 20 to 30 nm, measured by transmission electron microscopy or scanning electron microscopy.

Another object of the present invention is therefore a method wherein the expanded graphite comprises plate-shaped particles which have a thickness in the range from 10 to 1000 nm.

It is furthermore preferred that the particles comprised in the expanded graphite have a length in the range from 1 000 to 10 000 nm, preferably in the range from 2 000 to 6 000 nm and particularly preferably in the range from 3 000 to 4 000 nm, measured by microscopy, preferably by transmission electron microscopy or scanning electron microscopy.

Preferably, the width of the particles comprised in the expanded graphite is in the range from 1 000 to 10 000 nm, particularly preferably in the range from 2 000 to 6 000 nm and most preferably in the range from 3 000 to 4 000 nm, measured by microscopy, preferably by transmission electron microscopy or scanning electron microscopy.

Another object of the present invention is therefore a method wherein the expanded graphite comprises plate-shaped particles which have a length in the range from 1000 to 10000 nm and a width in the range from 1000 to 10000 nm.

The aspect ratio of the length to the thickness of the particles comprised in the expanded graphite is generally in the range from 10 to 400, preferably in the range from 80 : 300 and particularly preferably in the range from 100 to 200.

Within the context of the present invention, "aspect ratio" means the ratio of the average length of the particles comprised in the expanded graphite to the average thickness of the particles comprised in the expanded graphite, both measured by microscopy, preferably by transmission electron microscopy or scanning electron microscopy.

Another object of the present invention is therefore a method wherein the expanded graphite comprises plate-shaped particles and wherein the aspect ratio of the length to the thickness of the plate-shaped particles is in the range from 10 to 400.

### Rubber

The at least one rubber which is compounded with the expanded graphite in step a) comprises functional groups that are reactive towards the at least one thermoplastic polymer.

Within the context of the present invention, "at least one rubber" means precisely one rubber, but also a mixture of two or more rubbers.

The same holds true for the functional groups. Within the context of the present invention, "functional groups" means precisely one type of functional groups, but also two or more different types of functional groups that are reactive towards the at least one thermoplastic polymer.

Within the context of the present invention "functional groups that are reactive towards the at least one thermoplastic polymer" means that the functional groups are able to undergo reactions with the at least one thermoplastic polymer, in particular with functional groups comprised in the at least one thermoplastic polymer. For example, if the at least one thermoplastic polymer is a polyamide, then the functional group that is comprised in the at least one thermoplastic polymer and to which the functional groups of the at least one rubber are reactive is an amide group.

Suitable functional groups comprised in the at least one rubber that are reactive towards the at least one thermoplastic polymer are known to the skilled person. Preferred functional groups that are reactive towards the at least one thermoplastic polymer are selected from the group consisting of carboxylic acid, carboxylic anhydride, maleic anhydride, carboxylic ester, carboxamide, carboximide, amino, hydroxyl, epoxy, urethane and oxazoline groups.

Preferably, the functional groups which are comprised in the at least one rubber and which are reactive towards the at least one thermoplastic polymer are selected from the group consisting of carboxylic acids, carboxylic anhydrides and hydroxyl groups.

Most preferred, the functional groups which are comprised in the at least one rubber and which are reactive towards the at least one thermoplastic polymer are carboxylic anhydrides.

Another object of the present inventions is therefore a method wherein the functional groups, which are comprised in the at least one rubber and which are reactive towards the at least one thermoplastic polymer are selected from the group consisting of carboxylic acid, maleic anhydride, carboxylic anhydride, carboxylic ester, carboxamide, carboximide, amino, hydroxyl, epoxy, urethane and oxazoline groups.

The at least one rubber is preferably at least one impact modifying rubber.

Suitable at least one rubbers are known to the skilled person. The at least one rubber generally comprises an elastomeric fraction which has a glass transition temperature below -10°C, preferably below -30°C.

A preferred at least one rubber is a functionalized rubber. Preferred functionalized rubbers include functionalized polyolefin rubbers built up from at least one α-olefin having from 2 to 8 carbon atoms, optionally a diene, optionally a C₁-C₁₂-alkylester of acrylic or methacrylic acid or mixtures of esters of this type, optionally an ethylenically unsaturated C₂-C₂₀-mono- or dicarboxylic acid or of a functional derivative of an acid of this type, a monomer containing epoxy groups and optionally monomers capable of free radical polymerization. These functionalized polyolefin rubbers are described in more detail in US 6,509,403, which is incorporated herein by reference.

More preferred, the at least one rubber is made from 50 to 98.9% by weight, in particular from 60 to 94.85% by weight of ethylene, from 1 to 50% by weight, in particular from 5 to 40% by weight of an ester of acrylic or methacrylic acid, and from 0.1 to 20% by weight, in particular from 0.15 to 15% by weight of glycidyl acrylate and/or glycidyl methacrylate, acrylic acid and/or maleic anhydride, wherein the percent by weight are based on the sum of the percent of weight of ethylene, the ester of acrylic or methacrylic acid and, if appropriate, the glycidyl acrylate, the glycidyl methacrylate, the acrylic acid and the maleic anhydride.

Particularly preferred, the at least one rubber is selected from ethylene-methyl methacrylate-glycidyl methacrylate polymers, ethylene-methyl acrylate-glycidyl methacrylate polymers, ethylene-methyl acrylate-glycidyl acrylate polymers and ethylene-methyl methacrylate-glycidyl acrylate polymers.

### Step b)

In step b), the rubber modified graphite obtained in step a) is compounded with the at least one thermoplastic polymer in a second extruder to obtain the reinforced thermoplastic polymer.

The temperature during the compounding of the rubber modified graphite obtained in step a) and the at least one thermoplastic polymer is in general in the range from 180 to 350°C, preferably in the range from 240 to 310°C and particularly preferably in the range from 260 to 300°C.

Therefore, the temperature during step b) is typically in the range from 180 to 350°C, preferably in the range from 240 to 310°C and particularly preferably in the range from 260 to 300°C.

Another object of the present invention is therefore a method wherein the temperature during step b) is in the range from 180 to 350°C.

The pressure during the compounding of the rubber modified graphite with the at least one thermoplastic polymer in step b) is in general in the range from 1 to 80 bar, preferably in the range from 1 to 50 bar and particularly preferably in the range from 5 to 40 bar.

As second extruder in step b), any extruder known to the skilled person is suitable which can be used at the temperatures during step b). In general, the second extruder can be heated at least to the temperature, at which the rubber modified graphite obtained in step a) and the at least one thermoplastic polymer are compounded in step b).

The extruder may be a single or a twin screw extruder. Twin screw extruders are preferred. Twin screw extruders are also known as double screw extruders. The twin screw extruders may be corotating or counterrotating.

The second extruder can also comprise further devices, for example mixing devices. Mixing devices are known to the skilled person. Suitable mixing devices are for example static mixers and dynamic mixers.

The rubber modified graphite obtained in step a) and the at least one thermoplastic polymer can be added to the second extruder separately from each other and can be mixed and compounded in the second extruder to obtain the reinforced thermoplastic polymer.

In another embodiment of the present invention, the rubber modified graphite and the at least one thermoplastic polymer are mixed with each other before adding to the second extruder and the obtained mixture is then compounded in the second extruder to obtain the reinforced thermoplastic polymer.

For the mixing of the rubber modified graphite and the at least one thermoplastic polymer before the addition to the second extruder, any mixing device is suitable.

In another embodiment of the present invention, as second extruder in step b) the first extruder of step a) is used. In this embodiment, after the compounding of the expanded graphite and the at least one rubber in step a) in the first extruder, the at least one thermoplastic polymer is added to the first extruder and is then compounded with the rubber modified graphite obtained in step a) to obtain the reinforced thermoplastic polymer.

In step b), the rubber modified graphite and the at least one thermoplastic polymer can be compounded in any ratio. Preferably in step b) in the range from 1.1 to 70% by weight of the rubber modified graphite and in the range from 30 to 98.9% by weight of the at least one thermoplastic polymer are compounded based on the sum of the percent by weight of the rubber modified graphite and the at least one thermoplastic polymer.

Particularly preferred in step b), in the range from 1.5 to 50% by weight of the rubber modified graphite and in the range from 50 to 98.5% by weight of the at least one thermoplastic polymer are compounded and particularly preferably in the range from 2 to 35% by weight of the rubber modified graphite and in the range from 65 to 98% by weight of the at least one thermoplastic polymer are compounded, based on the sum of the percent by weight of the rubber modified graphite and the at least one thermoplastic polymer.

Another object of the present invention is therefore a method wherein in step b) in the range from 1.1 to 70 % by weight of the rubber modified graphite and in the range from 30 to 98.9 % by weight of the at least one thermoplastic polymer are compounded, based on the sum of the % by weight of the rubber-modified graphite and the at least one thermoplastic polymer.

In step b) further additives can be added to the second extruder and compounded with the rubber modified graphite and the at least one thermoplastic polymer. Suitable further additives are known to the skilled person. In step b) typically in the range from 0.1 to 10 % by weight, preferably in the range 0.1 to 5 % by weight and particularly preferably in the range from 0.1 to 1 % by weight of further additives are added, based on the sum of the percent by weight of the rubber modified graphite, the at least one thermoplastic polymer and the further additives.

If further additives are added in step b), the percent by weight given above for the rubber modified graphite and the at least one thermoplastic polymer are based on the sum of the percent by weight of the rubber modified graphite, the at least one thermoplastic polymer and the further additives.

The percent by weight of the rubber modified graphite, the at least one thermoplastic polymer and, if appropriate, the further additives in general add up to 100 %.

### Thermoplastic polymer

Within the context of the present invention, "at least one thermoplastic polymer" means precisely one thermoplastic polymer, and also a mixture of two or more thermoplastic polymers.

Thermoplastic polymers are known to the skilled person. Thermoplastic polymers are a amorphous, non-crosslinked and partially crystalline, non-crosslinked polymers. They are meltable and can be processed by extrusion, injection molding or in spinning processes. They contain not only crystalline, but also amorphous regions. Examples of thermoplastic polymers are polyolefins, vinyl polymers, polyamides, polyesters, polyacetates, polycarbonates and polyurethanes. Preferred thermoplastic polymers according to the present invention are polyolefins and polyamides. Particularly preferred thermoplastic polymers are polyamides

Another object of the present invention is therefore a method wherein the at least one thermoplastic polymer is selected from the group consisting of polyolefins and polyamides.

Polyolefins are known per se and are commercially available. They are usually prepared by polymerization of C₂-C₈-alkene monomers, preferably by polymerization of C₂-C₄-alkene monomers.

Within the context of the present invention, C₂-C₈-alkene means unsubstituted or at least monosubstituted hydrocarbons having 2 to 8 carbon atoms and at least one carbon-carbon double bond (C-C-double bond). "At least one carbon-carbon double bond" means precisely one carbon-carbon double bond and also two or more carbon-carbon double bonds.

In other words, C₂-C₈-alkene means that the hydrocarbons having 2 to 8 carbon atoms are unsaturated. The hydrocarbons may be branched or unbranched. Examples for C₂-C₈-alkenes with one C-C-double bond are ethene, propene, 1-butene, 2-butene, 2-methyl-propene (= isobutylene), 1-pentene, 2-pentene, 2-methyl-1-butene, 3-methyl-1-butene, 1-hexene, 2-hexene, 3-hexene and 4-methyl-1-pentene. Examples for C₂-C₈-alkenes having two or more C-C-double bonds are allene, 1,3-butadiene, 1,4-pentadiene, 1,3-pentadiene, 2-methyl-1,3-butadiene (= isoprene).

If the C₂-C₈-alkenes have one C-C-double bond, the polyolefins prepared from those monomers are linear. If more than one double bond is present in the C₂-C₈-alkenes, the polyolefins prepared from those monomers can be crosslinked. Linear polyolefins are preferred.

It is also possible to use polyolefin copolymers, which are prepared by using different C₂-C₈-alkene monomers during the preparation of the polyolefins.

Preferably, the polyolefins are selected from the group consisting of polymethylpentene, poly-1-butene, polyisobutylene, polyethylene and polypropylene. Particular preference is given to polyethylene and polypropylene and also their copolymers as are known to those skilled in the art and are commercially available.

The polyolefins can be prepared by any polymerization process known to the skilled person, preferably by free radical polymerization, for example by emulsion, bead, solution or bulk polymerization. Possible initiators are, depending on the monomers and the type of polymerization, free radical initiators such as peroxy compounds and azo compounds with the amounts of initiator generally being in the range from 0.001 to 0.5% by weight, based on the monomers.

Suitable polyamides are known to the skilled person.

The intrinsic viscosity of suitable polyamides is generally from 150 to 350 ml/g, preferably from 180 to 275 ml/g. Intrinsic viscosity is determined here from a 0.5% by weight solution of the polyamide in 96% by weight sulfuric acid at 25°C in accordance with ISO 307.

Preferred polyamides are semicrystalline or amorphous polyamides.

Examples of polyamides are those that derive from lactams having from 7 to 13 ring members. Other suitable polyamides are those obtained through reaction of dicarboxylic acids with diamines.

Examples that may be mentioned of polyamides that derive from lactams are polyamides that derive from polycaprolactam, from polycaprylolactam, and/or from polylaurolactam.

If polyamides are used that are obtainable from dicarboxylic acids and diamines, dicarboxylic acids that can be used are alkanedicarboxylic acids having from 6 to 14 carbon atoms, preferably from 6 to 10 carbon atoms. Aromatic dicarboxylic acids are also suitable.

Examples that may be mentioned here as dicarboxylic acids are adipic acid, azelaic acid, sebacic acid, dodecanedicarboxylic acid, and also terephthalic acid and/or isophthalic acid.

Examples of suitable diamines are alkanediamines, having from 4 to 14 carbon atoms, in particular alkanediamines having from 6 to 8 carbon atoms, and also aromatic diamines, for example m-xylylenediamine, di(4-aminophenyl)methane, di(4-aminocyclohexyl)methane, 2,2-di(4-aminophenyl)propane, 2,2-di(4-aminocyclohexyl)-propane, and 1,5-diamino-2-methylpentane.

Other suitable polyamides are those obtainable through copolymerization of two or more of the monomers mentioned above and mentioned below, and mixtures of a plurality of polyamides in any desired mixing ratio.

Preferred polyamides are polyhexamethyleneadipamide, polyhexamethylene-sebacamide, and polycaprolactam, and also nylon-6/6,6, in particular having a proportion of from 75 to 95% by weight of caprolactam units.

Particular preference is given to mixtures of nylon-6 with other polyamides, in particular with nylon-6/6,6 (PA 6/66), particular preference being given to mixtures of from 80 to 50% by weight of PA 6 and from 20 to 50% by weight of PA 6/66, where the PA 6/66 comprises from 75 to 95% by weight of caprolactam units, based on the total weight of the PA 6/66 in the mixture.

The following, non-exclusive list comprises the abovementioned polyamides, and other suitable polyamides, and also the monomers comprised.

### AB polymers:

| | |
|---|---|
| PA 4 | Pyrrolidone |
| PA 6 | ε-Caprolactam |
| PA 7 | Ethanolactam |
| PA 8 | Caprylolactam |
| PA 9 | 9-Aminopelargonic acid |
| PA 11 | 11-Aminoundecanoic acid |
| PA 12 | Laurolactam |

### AA/BB polymers:

| | |
|---|---|
| PA 46 | Tetramethylenediamine, adipic acid |
| PA 66 | Hexamethylenediamine, adipic acid |
| PA 69 | Hexamethlyenediamine, azelaic acid |
| PA 610 | Hexamethylenediamine, sebacic acid |
| PA 612 | Hexamethylenediamine, decanedicarboxylic acid |
| PA 613 | Hexamethylenediamine, undecanedicarboxylic acid |
| PA 1212 | 1,12-Dodecanediamine, decanedicarboxylic acid |
| PA 1313 | 1,13-Diaminotridecane, undecanedicarboxylic acid |
| PA 6T | Hexamethylenediamine, terephthalic acid |
| PA MXD6 | m-Xylylenediamine, adipic acid |
| | |
| PA 6I | Hexamethylenediamine, isophthalic acid |
| PA 6-3-T | Trimethylhexamethylenediamine, terephthalic acid |
| PA 6/6T | (see PA 6 and PA 6T) |
| PA 6/66 | (see PA 6 and PA 66) |
| PA 6/12 | (see PA 6 and PA 12) |
| PA 66/6/610 | (see PA 66, PA 6 and PA 610) |
| PA 6I/6T | (see PA 6I and PA 6T) |
| PA PACM 6 | Diaminodicyclohexylmethane, adipic acid |
| PA PACM 12 | Diaminodicyclohexylmethane, laurolactam |
| PA 6I/6T/PACM | as PA 6I/6T + diaminodicyclohexylmethane |
| PA 12/MACMI | Laurolactam, dimethyldiaminodicyclohexylmethane, isophthalic acid |
| PA 12/MACMT | Laurolactam, dimethyldiaminodicyclohexylmethane, terephthalic acid |
| PA PDA-T | Phenylenediamine, terephthalic acid |

Preferred polyamides are PA 6, PA 66 and PA PACM 6.

### Reinforced thermoplastic polymer

The reinforced thermoplastic polymer obtained in step b) in general comprises from 0.1 to 40% by weight of the expanded graphite, from 1 to 30% by weight of the at least one rubber and from 30 to 98.9% by weight of the at least one thermoplastic polymer, based on the sum of the percent by weight of expanded graphite, the at least one rubber and the at least one thermoplastic polymer, preferably based on the total amount of the reinforced thermoplastic polymer.

Preferably, the reinforced thermoplastic polymer comprises in the range from 0.5 to 30% by weight of the expanded graphite, in the range from 1 to 20% by weight of the at least one rubber and in the range from 50 to 98.5% by weight of the at least one thermoplastic polymer, based on the sum of the percent by weight of the expanded graphite, the at least one rubber and the at least one thermoplastic polymer, preferably based on the total amount of the reinforced thermoplastic polymer.

Particularly preferably, the reinforced thermoplastic polymer comprises in the range from 1 to 20% by weight of the expanded graphite, in the range from 1 to 15% by weight of the at least one rubber and in the range from 65 to 98% by weight of the at least one thermoplastic polymer, based on the sum of the percent by weight of the expanded graphite, the at least one rubber and the at least one thermoplastic polymer, preferably based on the total amount of the reinforced thermoplastic polymer.

It should be clear that, if the rubber modified graphite obtained in step a), comprised further fillers, the reinforced thermoplastic polymer as well comprises these further fillers. Furthermore, if further additives were added in step b), then the reinforced thermoplastic polymer comprises the further additives as well.

To the person skilled in the art it is clear that during the compounding of the rubber modified graphite obtained in step a) with the at least one thermoplastic polymer, the functional groups of the at least one rubber that are reactive towards the at least one EB14-7461 EP thermoplastic polymer undergo reactions with the at least one thermoplastic polymer. Therefore, the reinforced thermoplastic polymer comprises the at least one rubber and the at least one thermoplastic polymer in reacted form. These reactions are known to the skilled person.

Another object of the present invention is the reinforced thermoplastic polymer manufactured by the inventive process.

The inventive reinforced thermoplastic polymer exhibits high barrier properties for gas and fuel. Therefore, the inventive reinforced thermoplastic polymer is in particular suitable for fuel applications and barrier applications.

Another object of the present invention is the use of the inventive reinforced thermoplastic polymer in fuel applications and in barrier applications.

The reinforced thermoplastic polymer is in particular suitable for fuel tanks and other fuel applications like fuel lines.

The reinforced thermoplastic polymer can be processed by any method known to the skilled person. Preferably the reinforced thermoplastic polymer is processed by blow molding, injection molding or film extrusion.

Another object of the present invention is therefore a molded article manufactured from the inventive reinforced thermoplastic polymer.

The reinforced thermoplastic polymer exhibits a high modulus, which means a high stiffness and an increased toughness.

## Claims

1. A method for the preparation of a reinforced thermoplastic polymer comprising the steps:
a) compounding of an expanded graphite and at least one rubber in a first extruder to obtain a rubber modified graphite,
b) compounding of the rubber modified graphite obtained in step a) with at least one thermoplastic polymer in a second extruder to obtain the reinforced thermoplastic polymer,
wherein the at least one rubber comprises functional groups that are reactive towards the at least one thermoplastic polymer.

2. The method according to claim 1, wherein the functional groups, which are comprised in the at least one rubber and which are reactive towards the at least one thermoplastic polymer are selected from the group consisting of carboxylic acid, maleic anhydride, carboxylic anhydride, carboxylic ester, carboxamide, carboximide, amino, hydroxyl, epoxy, urethane and oxazoline groups.

3. The method according to claim 1 or 2, wherein the at least one thermoplastic polymer is selected from the group consisting of polyolefins and polyamides.

4. The method according to any one of the claims 1 to 3, wherein the temperature during step a) is in the range from 80 to 200°C.

5. The method according to any one of the claims 1 to 4, wherein the temperature during step b) is in the range from 180 to 350°C.

6. The method according to any one of the claims 1 to 5, wherein the expanded graphite comprises plate-shaped particles which have a thickness in the range from 10 to 1000 nm.

7. The method according to any one of the claims 1 to 6, wherein the expanded graphite comprises plate-shaped particles which have a length in the range from 1000 to 10000 nm and a width in the range from 1000 to 10000 nm.

8. The method according to any one of the claims 1 to 7, wherein the expanded graphite comprises plate-shaped particles and wherein the aspect ratio of the length to the thickness of the plate-shaped particles is in the range from 10 to 400.

9. The method according to any one of the claims 1 to 8, wherein the rubber modified graphite obtained in step a) comprises in the range from 20 to 99% by weight of the expanded graphite and in the range from 1 to 80 % by weight of the at least one rubber, based on the total amount of the rubber-modified graphite.

10. The method according to any one of the claims 1 to 9, wherein in step b) in the range from 1.1 to 70 % by weight of the rubber modified graphite and in the range from 30 to 98.9 % by weight of the at least one thermoplastic polymer are compounded, based on the sum of the % by weight of the rubber-modified graphite and the at least one thermoplastic polymer.

11. The reinforced thermoplastic polymer manufactured by the process according to any one of the claims 1 to 10.

12. The use of the reinforced thermoplastic polymer according to claim 11 in fuel applications and in barrier applications.

13. Molded article manufactured from the reinforced thermoplastic polymer according to claim 11.
